Europäisches Patentamt

European Patent Office

Office européen des brevets

(11) Publication number: **0 107 303**
**B1**

## EUROPEAN PATENT SPECIFICATION

(45) Date of publication of patent specification: **06.07.88**

(21) Application number: **83305123.8**

(22) Date of filing: **05.09.83**

(51) Int. Cl.⁴: **C 08 L 69/00, C 08 L 67/02,
C 08 L 51/04**

(54) Impact resistant blend and method for making it.

(30) Priority: **24.09.82 US 423397**

(43) Date of publication of application:
**02.05.84 Bulletin 84/18**

(45) Publication of the grant of the patent:
**06.07.88 Bulletin 88/27**

(84) Designated Contracting States:
**DE FR GB IT NL**

(56) References cited:
**EP-A-0 064 689
DE-A-2 653 145
US-A-4 172 859
US-A-4 260 690
US-A-4 550 138**

(73) Proprietor: **UNIROYAL, INC.
1230 Avenue of the Americas Rockefeller Center
New York, New York 10020 (US)**

(72) Inventor: **Wefer, John M.
Saddle Ridge Road Newton
Fairfield Connecticut 06470 (US)**

(74) Representative: **Harrison, Michael Robert et al
URQUHART-DYKES & LORD 5th Floor Tower
House Merrion Way
Leeds LS2 8PA West Yorkshire (GB)**

The file contains technical information
submitted after the application was filed and
not included in this specification

Note: Within nine months from the publication of the mention of the grant of the European patent, any person may
give notice to the European Patent Office of opposition to the European patent granted. Notice of opposition shall
be filed in a written reasoned statement. It shall not be deemed to have been filed until the opposition fee has been
paid. (Art. 99(1) European patent convention).

Courier Press, Leamington Spa, England.

# 0 107 303

**Description**

This invention relates to a resin blend having high impact strength.

Various blends based on polyester resin, polycarbonate resin, or graft copolymer rubber-resin materials have heretofore been proposed (e.g., U.S. patents 3,591,659; 3,919,353; 4,022,748; 4,034,013; 4,034,016; 4,044,073; 4,096,202; 4,257,937; 4,260,690 and 4,280,949 and German patent DE—A1—2653145). Heat resistant blends of graft copolymers with polyester resins and with polycarbonate resins are disclosed in US patent 4260690 and in German patent DE—A1—2653145 respectively.

The present invention is based on a blend of (a) polyester resin, (b) polycarbonate resin and (c) graft copolymer composition comprising EPDM type rubber grafted with at least one polar monomer. The blend of the invention has unexpected properties, particularly high impact strength in combination with heat resistance.

The polyester resin component (a) of the blend of the invention is ordinarily poly(1,4-butylene terephthalate) and is described for example in U.S. patents 2,465,319; 3,047,539; 4,257,937 and 4,280,949.

The polycarbonate resin component (b) of the blend of the invention is ordinarily an aromatic polycarbonate resin and is described for example in U.S. patents 4,034,016; 4,257,937 and 4,280,949.

The graft copolymer material (c) constituting the third component of the invention is ordinarily based on a graft copolymer of resin-forming monomeric material on a rubbery unsaturated spine polymer of the ethylene-propylene-non-conjugated diene type (EPDM), although saturated rubber spine of the ethylene-propylene copolymer type (EPM) may also be used. The grafted monomeric material is ordinarily at least one polar monomer such as an alkenoic nitrile, ester, amide or acid, or a vinyl aromatic monomer such as styrene; mixtures of such alkenoic monomer and vinyl aromatic monomer are particularly useful in preparing the graft copolymer. Useful monomers include such acids as acrylic and methacrylic acid, and esters of such acids including methyl, ethyl, propyl, butyl, 2-ethylhexyl and cyclohexyl esters; acrylamide and methacrylamide may be used, as well as vinyl acetate, styrene (also substituted styrenes), maleic acid anhydride, acrylonitrile, and the like. Such monomers comprise 5—75% by weight of the graft copolymer.

It will be understood that in practice the product of the graft copolymerization process is actually a mixture of true graft of resin on rubber along with a certain amount of separate, ungrafted resin (that is, the grafting efficiency is not 100%; see U.S. patent 4,202,948, Peascoe).

In preparing the graft copolymer either saturated EPM (ethylene-propylene copolymer) or unsaturated EPDM (ethylene-propylene-non-conjugated diene [e.g., ethylidene norbornene, dicyclopentadiene, hexadiene] terpolymer) may be used.

The proportion of the three polymeric ingredients may vary, as indicated in the following table, wherein the amounts are expressed in parts by weight per 100 parts of blend:

| | Parts by weight | | |
| --- | --- | --- | --- |
| | Broad | Preferred | More preferred |
| (a) Polyester resin | 20—90 | 40—80 | 60—80 |
| (b) Polycarbonate resin | 5—60 | 10—30 | 10—20 |
| (c) Graft copolymer | 5—50 | 10—50 | 10—20 |

Preferred compositions include a major proportion of the polyester resin component (a) which retains good properties at elevated temperature, along with sufficient polycarbonate resin (b) and graft copolymer (c) to provide high notched impact strength.

Although it is possible to use modifier (c) levels above 20% (the driving force for a commercial modifier is to be able to use as little as possible) such an increase would tend to improve low temperature impact strength at the expense of hardness, tensile strength and stiffness.

To prepare the blends of the invention, the polyester resin component (a), the polycarbonate resin component (b), and the graft copolymer composition (c) are mixed together at elevated temperature in conventional plastics mixing equipment, such as a twin screw extruder-mixer. If desired, any two of the components may be mixed together first, followed by mixing in of the third component.

One desirable mixing procedure is a two-step compounding process involving first working the graft copolymer composition (c) without the other ingredients (a) and (b), under shearing and fluxing conditions, for example in a twin screw extruder-mixer. This disperses the EPDM within the resin contained in the graft copolymer composition, to form an "inverted" composition in which the EPDM rubber is the discontinuous phase. The second step involves fluxing the inverted graft component (c) with the polyester component (a) and the polycarbonate component (b) under lower shear conditions, for example in a single screw extruder. In commercial practice these two steps can be combined in one extrusion operation, using an extruder having a first and second feedport; a section of the extruder downstream of the first feedport can be used to shear (invert) the graft copolymer (c) and a section downstream of the second feedport can be used to mix the graft with the other ingredients (a) and (b).

The inverted graft composition (a) may also be pelletized and tumble blended with polyester (a) and

2

0 107 303

polycarbonate (b) pellets to form a physical mixture which can be fed into an injectio molding machine or an extruder. In this case the plasticizing screw of the injection or extrusion machine can perform the second stage of mixing during fabrication.

As indicated, in one aspect the invention is based on the discovery that three-component blends of polybutylene terephthalate resin (PBT) with polycarbonate resin and EPDM grafted with at least one polar monomer have high impact strength.

Particularly desirable products are those in which the grafting monomers are styrene/acrylonitrile, styrene/methyl methacrylate, and methyl methacrylate. The presence of polycarbonate resin is required for high notched Izod impact strength.

The following example will serve to illustrate the practice of the invention in more detail.

Example

Three graft copolymers, designated A, B and C in Table I below, are prepared by the slurry technique described in U.S. Patent 4,202,948 (Peascoe) using an ethylene-propylene-ethylidene norbornene EPDM terpolymer rubber (E/P ratio 60/40; Mooney viscosity 68 ML-4 at 125°C (257°F), iodine number 20) as the spine rubber. The resin forming monomers in each graft are indicated in Table 1, which gives the composition of the resin portion of the graft copolymers. The overall resin/EPDM ratio in the graft copolymer is 50/50 in each case.

TABLE 1

| Resin | Ratio |
|---|---|
| A Styrene/acrylonitrile | 72/28 |
| B Styrene/methyl methacrylate | 50/50 |
| C Methyl methacrylate | 100 |

The blends listed in Table 2 are prepared by first fluxing the graft copolymers (A, B or C) in a 53 mm Werner and Pfleiderer twin-screw extruder equipped with a strand die and pelletizer. The pelletized grafts are then fluxed with PBT (Valox 310; trademark) and polycarbonate resin (reaction product of bis-phenol A with phosgene; Lexan 103 [trademark]) in a 2.5 cm (one inch) single-screw extruder to make the blend shown in Table 2. Specimens for mechanical property testing are cut from 3.2 mm (1/8 inch) injection molded plaques.

Blends 5, 8—11, 13, 15 and 16 in Table 2 illustrate the practice of the invention although blends 9—11 indicate that the optimum levels for polycarbonate resin and for the graft copolymer are each over 10% by weight. The other materials in Table 2 are controls prepared from unmodified PBT (1) or two-component PBT blends containing polycarbonate (2) or the graft copolymer (3, 4, 6, 7 and 12). In Table 2 the amounts of each component are expressed in parts by weight; PBT stands for polybutylene terephthalate resin, PC stands for polycarbonate resin, NIRT stands for notched Izod impact strength at room temperature (reported in foot pounds per inch of notch) and NI −29°C (−20°F) stands for notched Izod impact strength at −29°C (−20°F); Rockwell R indicates the hardness.

TABLE 2

| Blend # | 1 | 2 | 3 | 4 | 5 | 6 | 7 | 8 |
|---|---|---|---|---|---|---|---|---|
| Graft type | | | A | A | A | B | B | B |
| Graft level | | | 10 | 20 | 20 | 10 | 20 | 20 |
| PBT | 100 | 80 | 90 | 80 | 60 | 90 | 80 | 60 |
| PC | | 20 | | | 20 | | | 20 |
| NIRT | 0.6 | 0.9 | 1.3 | 1.9 | 17.9 | 0.9 | 0.9 | 17.8 |
| NI −29°C (−20°F) | 0.4 | 0.7 | 0.7 | 0.8 | 1.5 | 0.6 | 0.7 | 1.8 |
| Rockwell R | 119 | 120 | 113 | 108 | 107 | 114 | 107 | 108 |

TABLE 2 (continued)

| Blend # | 9 | 10 | 11 | 12 | 13 | 14 | 15 | 16 |
|---|---|---|---|---|---|---|---|---|
| Graft type | B | B | B | C | C | — | A | B |
| Graft level | 20 | 10 | 10 | 20 | 20 | — | 20 | 20 |
| PBT | 70 | 70 | 80 | 80 | 60 | 50 | 40 | 40 |
| PC | 10 | 20 | 10 | | 20 | 50 | 40 | 40 |
| NIRT | 4.7 | 2.6 | 1.6 | 1.0 | 15.0 | 0.9 | 16.2 | 16.4 |
| NI −29°C (−20°F) | 0.5 | 0.8 | 0.5 | 0.7 | 1.6 | 0.8 | 3.6 | 3.0 |
| Rockwell R | 108 | 114 | 115 | 108 | 114 | 118 | 106 | 108 |

The foregoing examples may be repeated using other aromatic polycarbonate resins or other EPM or EPDM graft copolymers as described in the patents mentioned above.

**Claims**

1. A blend suitable for use in extruding and moulding compositions, the blend consisting of:
(a) polyester resin,
(b) polycarbonate resin, and
(c) graft copolymer of at least one polar monomer on an ethylene-propylene or ethylene-propylene-non-conjugated diene rubber spine, the proportions of (a), (b) and (c) expressed in parts by weight per 100 parts of (a), (b) and (c) being as follows:
(a) 20—90
(b) 5—60
(c) 5—50
the said polar monomer being selected from one or more of styrene, acrylonitrile and methyl methacrylate, in an amount of about 5—75% by weight of the graft copolymer (c), the said graft (c) being an inverted composition in which the rubber is a discontinuous phase.

2. A blend according to claim 1 characterised in that the proportions of (a), (b) and (c) are as follows:
(a) 40—80
(b) 10—30
(c) 10—50.

3. A blend according to claim 1 or claim 2 characterised in that (a) is poly(1,4-butylene terephthalate), and the proportions of (a), (b) and (c) are as follows:—
(a) 60—80
(b) 10—20
(c) 10—20.

4. A blend according to any of the preceding claims characterised in that (c) is a graft of styrene/acrylonitrile, styrene/methyl methacrylate, or methyl methacrylate on ethylene-propylene-non-conjugated diene terpolymer rubber.

5. A blend according to any of the preceding claims characterised in that the non-conjugated diene is ethylidene norbornene.

6. A blend according to any of the preceding claims characterised in that the grafting monomer is styrene/acrylonitrile, styrene/methyl methacrylate, or methyl methacrylate.

7. A blend suitable for use in extruding and moulding compositions, the blend consisting of
(a) a polyester resin
(b) polycarbonate resin, and
(c) graft copolymer of at least one polar monomer on an ethylene-propylene or ethylene-propylene-nonconjugated diene rubber spine, the proportions of (a), (b) and (c) expressed in parts by weight per 100 parts of (a), (b) and (c) being as follows:
(a) 20—90
(b) 5—60
(c) 5—50
the said polar monomer being present in an amount of 5—75% by weight of (c), and the graft copolymer (c) having been worked under shearing and fluxing conditions to disperse the rubber portion of the graft within the resinous portion thereof to form an inverted composition.

8. A method of making a blend as claimed in any of the preceding claims characterised in that the method comprises working the said graft copolymer (c) under shearing and fluxing conditions to disperse the rubber portion of the graft within the resinous portion thereof, and thereafter blending the resulting inverted graft with components (a) and (b).

**Patentansprüche**

1. Mischung, die für die Verwendung in Strangpreß- und Formmassen geeignet ist, wobei die Mischung aus:
(a) Polyesterharz,
(b) Polycarbonatharz und
(c) einem Pfropfcopolymer mindestens eines polaren Monomers, das auf eine Hauptkette aus einem Ethylen-Propylen- oder einem Ethylen-Propylene-nichtkonjugiertes Dien-Kautschuk aufgepfropft ist, besteht, wobei die in Massenteilen je 100 Masseteile (a), (b) und (c) ausgedrückten Anteile von (a), (b) und (c) wie folgt sind:
(a) 20 bis 90,
(b) 5 bis 60,
(c) 5 bis 50,
wobei das erwähnte polare Monomer aus einem oder mehr als einem der Monomere, Styrol, Acrylnitril und Methylmethacrylat ausgewählt und in einer Menge von etwa 5 bis 75 Masse-%, bezogen auf das Pfropfcopolymer (c) vorhanden ist und das erwähnte Pfropfcopolymer (c) ein invertieres Gemisch ist, in dem der Kautschuk eine disperse Phase ist.

2. Mischung nach Anspruch 1, dadurch gekennzeichnet, daß die Anteile von (a), (b) und (c) wie folgt sind:
(a) 40 bis 80,
(b) 10 bis 30,
(c) 10 bis 50.

3. Mischung nach Anspruch 1 oder Anspruch 2, dadurch gekennzeichnet, daß (a) Poly-1,4-butylenterephthalat ist und die Anteile von (a), (b) und (c) wie folgt sind:
(a) 60 bis 80,
(b) 10 bis 20,
(c) 10 bis 20.

4. Mischung nach einem der vorhergehenden Ansprüche, dadurch gekennzeichnet, daß (c) ein Pfropfcopolymer von auf einen Ethylen-Propylen-nichtkonjugiertes Dien-Terpolymerkautschuk aufgepfropftem Styrol/Acrylnitril, Styrol/Methylmethacrylat oder Methylmethacrylat ist.

5. Mischung nach einem der vorhergehenden Ansprüche, dadurch gekennzeichnet, daß das nichtkonjugierte Dien Ethylidennorbornen ist.

6. Mischung nach einem der vorhergehenden Ansprüche, dadurch gekennzeichnet, daß das Pfropfmonomer Styrol/Acrylnitril, Styrol/Methylmethacrylat oder Methylmethacrylat ist.

7. Mischung, die für die Verwendung in Strangpreß- und Formmassen geeignet ist, wobei die Mischung aus:
(a) Polyesterharz,
(b) Polycarbonatharz und
(c) einem Pfropfcopolymer mindestens eines polaren Monomers, das auf eine Hauptkette aus einem Ethylen-Propylen- oder einem Ethylen-Propylen-nichtkonjugiertes Dien-Kautschuk aufgepfropft ist, besteht, wobei die in Masseteilen je 100 Masseteile (a), (b) und (c) ausgedrückten Anteile von (a), (b) und (c) wie folgt sind:
(a) 20 bis 90,
(b) 5 bis 60,
(c) 5 bis 50,
wobei das erwähnte polare Monomer in einer Menge von 5 bis 75 Masse-%, bezogen auf (c), vorhanden ist und das Pfropfcopolymer (c) unter Scher- und Erweichungsbedingungen bearbeitet worden ist, um zur Bildung eines invertierten Gemisches den kautschukanteil des Pfropfcopolymers in seinem Harzanteil zu dispergieren.

8. Verfahren zur Herstellung einer Mischung nach einem der vorhergehenden Ansprüche, dadurch gekennzeichnet, daß bei dem Verfahren das erwähnte Pfropfcopolymer (c) unter Scher- und Erweichungsbedingungen bearbeitet wird, um den Kautschukanteil des Pfropfcopolymers in seinem Harzanteil zu dispergieren, und das erhaltene invertierte Pfropfcopolymer danach mit den Komponenten (a) und (b) vermischt wird.

**Revendications**

1. Mélange approprié à l'utilisation dans des compositions d'extrusion et de moulage, le mélange consistant en:
(a) une résine de polyester,
(b) une résine de polycarbonate, et
(c) un copolymère greffé d'au moins un monomère polaire sur une ossature de caoutchouc d'éthylène-propylène ou d'éthylène-propylène-diène non conjugué, les proportions de (a), (b) et (c) exprimées en parties en poids pour 100 parties de (a), (b) et (c) étant les suivantes:

(a) 20—90
(b) 5—60
(c) 5—50

ledit monomère polaire étant choisi parmi un ou plusieurs des monomères suivants: styrène, acrylonitrile et méthyl méthacrylate, en une quantité d'environ 5—75% en poids du copolymère greffé (c), ledit copolymère greffé (c) étant une composition inversée dans laquelle le caoutchouc est une phase discontinue.

2. Mélange selon la revendication 1, caractérisé en ce que les proportions de (a), (b) et (c) sont les suivantes:

(a) 40—80
(b) 10—30
(c) 10—50.

3. Mélange selon la revendication 1 ou la revendication 2, caractérisé en ce que (a) est le poly(1,4-butylène téréphtalate), et les proportions de (a), (b) et (c) sont les suivantes:

(a) 60—80
(b) 10—20
(c) 10—20.

4. Mélange selon l'une des revendications précédentes, caractérisé en ce que (c) est un polymère greffé de styrène/acrylonitrile, styrène/méthyl méthacrylate, ou méthyl méthacrylate sur un caoutchouc de terpolymère éthylène-propylène-diène non conjugué.

5. Mélange selon l'une des revendications précédentes, caractérisé en ce que le diène non conjugué est l'éthylidène norbornène.

6. Mélange selon l'une des revendications précédentes, caractérisé en ce que le monomère de greffage est le styrène/acrylonitrile, styrène/méthyl méthacrylate, ou le méthyl méthacrylate.

7. Mélange approprié à l'utilisation dans des compositions d'extrusion et de moulage, le mélange consistant en:

(a) une résine de polyester
(b) une résine de polycarbonate, et
(c) un polymère greffé d'au moins un monomère polaire sur une ossature de caoutchouc d'éthylène-propylène ou d'éthylène-propylène-diène non conjugué, les proportions de (a), (b) et (c) exprimées en parties en poids pour 100 parties de (a), (b) et (c) étant les suivantes:

(a) 20—90
(b) 5—60
(c) 5—50

ledit monomère polaire étant présent en une quantité de 5—75% en poids de (c), et le copolymère greffé (c) ayant été traité dans des conditions de cisaillement et de plastification pour disperser la fraction de coautchouc du copolymère greffé dans la fraction de résine de celui-ci pour former une composition inversée.

8. Procédé de préparation d'un mélange tel que revendiqué dans l'une des revendications précédentes, caractérisé en ce que le procédé comprend le traitement dudit copolymère greffé (c) dans des conditions de cisaillement et de plastification pour disperser la fraction de caoutchouc du copolymère greffé dans la fraction de résine de celui-ci, puis le mélangeage du copolymère greffé inversé résultant avec les constituants (a) et (b).